# EUROPÄISCHE PATENTSCHRIFT

(11) **EP 0 617 088 B1**
(45) Veröffentlichungstag und Bekanntmachung des Hinweises auf die Patenterteilung: **21.07.1999**
(21) Anmeldenummer: 94104418.2
(22) Anmeldetag: 21.03.1994
(51) Int. Cl.: C08L 77/00, C08L 51/06, C08L 77/06, C08L 77/02

(54) **Ternäre Polymermischung und ihre Verwendung**
Ternary polymer blends and their use
Compositions ternaires de polymères et leur utilisation

(30) Priorität: 24.03.1993 DE 4309535; 08.03.1994 DE 4407712
(43) Veröffentlichungstag der Anmeldung: 28.09.1994
(73) Patentinhaber: EMS-INVENTA AG, 8001 Zürich (CH)
(72) Erfinder: Presenz, Ulrich, Dr. rer. nat., CH-7014 Trin (CH); Hewel, Manfred, Dr. rer. nat., CH-7415 Rodels (CH)
(74) Vertreter: Becker, Eberhard, Dr.

(56) Entgegenhaltungen:
- EP-A- 0 315 451
- EP-A- 0 337 153
- EP-A- 0 346 148
- EP-A- 0 346 149
- GB-A- 2 226 035
- CHEMICAL ABSTRACTS, vol. 98, no. 24, 13. Juni 1983, Columbus, Ohio, US; abstract no. 199239m, & JP-A-57 200 448 (MITSUBISHI CHEMICAL INDUSTRIES) 8. Dezember 1982

## Beschreibung

Die Erfindung betrifft den in den Patentansprüchen angegebenen Gegenstand. Insbesondere betrifft die Erfindung eine Polyamid enthaltende Polymermischung die eine Schmelzviskosität von 1000 bis 1400 Pa.s (270°C/122,6N) besitzt und umfaßt die Komponenten Polyamid, mindestens teilweise mit einer ungesättigten Carbonsäure oder einem ungesättigten Carbonsäurederivat gepfropftes Polyolefin hoher Dichte und funktionalisiertes Polyolefinelastomer, das als Monomereinheiten u.a. Ethylen und Propylen enthält, sowie. Die Erfindung betrifft ferner das Verfahren zur Herstellung dieser Polymermischung. Die Erfindung betrifft weiterhin die Verwendung dieser Mischung zur Herstellung von Formteilen, insbesondere durch Spritzgießen, Extrudieren, Koextrudieren, Blasformen oder Umformen. Ferner betrifft die Erfindung auch eine spezielle Anwendung eines blasgeformten Formteilbeutels als Innenschicht eines Behälters, welcher eine Außen- und eine Innenschicht mit dazwischenliegendem Treibmittel sowie ein Ventil umfaßt.

US 3 373 222 beansprucht ein Blend aus Polyolefin und Polyamid mit einem speziellen carboxylierten Polyethylen als Verträglichkeitsvermittler. Nachteilig ist hier die relativ geringe Wirksamkeit des Verträglichkeitsvermittlers, was schlechte mechanische Eigenschaften zur Folge hat. Auch sind die Barriereeigenschaften eines solchen Blends schlecht.

DE 27 22 270 offenbart eine binäre Mischung mit hoher Schmelzviskosität aus Polyamid und modifiziertem Polyethylen, wobei die Moläquivalente ihrer aktiven Gruppen eine spezielle Stöchiometrie erfüllen müssen, um die gestellte Aufgabe, nämlich die Erhöhung der Schlagfestigkeit, zu lösen.

US 4 410 482 beschreibt ein spezielles Verfahren zur Herstellung eines Formteils in dem in einer Polyolefinmatrix zweidimensionale, parallel verlaufende Schichten eines Polykondensats, die sich gegenseitig überlappen, vorliegen. Diese sehr spezielle Struktur soll sowohl die mechanischen Eigenschaften als auch die Barriereeigenschaften verbessern.

In DE 40 29 964 A1 wird ein Großbehälter bestehend aus einem Laminat aus zwei bis drei Schichten beansprucht, wobei eine Schicht von einem modifizierten Polyamid, welches ein binäres Blend aus Polyamid und einem gepfropften Polyolefin ist, gebildet wird und die restlichen Schichten aus einem gepfropften Polyethylen aufgebaut sind. Der Nachteil besteht in der hohen Steifigkeit dieses Laminats, da Mehrschichtstrukturen die Flexibilität herabsetzen.

DE 4 010 958 A1 beschreibt eine gereckte, schrumpffähige Schlauchfolie aus einem binären Blend aus Polyamid und säuremodifiziertem Polyolefin zur Herstellung einer Wursthülle mit verbesserter Barrierewirkung und verbessertem Schälverhalten. Nachteilig ist hier, daß als Verträglichkeitsvermittler ein Copolyolefin verwendet werden muß, das eine α, β-ungesättigte Carbonsäure als Comonomeres enthält.

US 4 346 194 beschreibt ein Blend aus Polyamid 6, Polyamid 6.6 und gepfropftem EPDM mit einer verbesserten Schlagzähigkeit bei tiefen Temperaturen. Dieses Blend zeigt nur eine eingeschränkte Wirksamkeit als Barrierematerial. Außerdem ist seine Stabilität gegenüber Hitze- und/oder Lichteinwirkung wegen der aus dem EPDM stammenden Doppelbindungen gering.

EP 0 397 531 A1 beansprucht ein binäres Blend aus einem aromatischen Polyamid und einem gepfropften Polyolefin, welches einen bestimmten Kristallinitätsgrad und eine bestimmte Glasübergangstemperatur aufweisen muß. Ein derartiges Blend ermöglicht die Herstellung von hochsteifen Formkörpern mit hoher Wärmeformbeständigkeit.

EP 0 519 248 A1 beschreibt thermoplastische Formmassen auf Basis von teilaromatischen Copolyamiden und Polyolefinen, die sich durch gute Schlagzähigkeit sowie erhöhte Verarbeitungsstabilität auszeichnen. Das als Komponente (B) eingesetzte Polypropylen ist sehr steif und zeigt einen Zug-E-Modul von etwa 1800 N/mm². Außerdem hat es schlechtere Barriereeigenschaften gegenüber Kohlenwasserstoffen als HD-Polyethylen. Als Komponente (C) werden in der EP 0 519 248 A1 Haftvermittler wie Polybond®, Hostamont®, Admer® etc. eingesetzt. Als Kautschuke, die die Zähigkeiten der beschriebenen Polyamide erhöhen, werden EP- bzw. EPDM-Kautschuke eingesetzt, die wegen der enthaltenen Doppelbindung sehr empfindlich gegenüber Hitze- und/oder Lichteinwirkung sind. Die Schmelzviskosität der Formmassen liegt zu hoch, als daß man diese zur Herstellung von speziellen Formteilen einsetzen kann.

DE 4 131 908 A1 hat zum Ziel, Polyamid/Polyolefin-Gemische mit möglichst tiefer Schmelzviskosität und möglichst hohem E-Modul für Spritzgussteile mit verbesserter Homogenität zur Verfügung zu stellen. Ein Schmelzflußindex, gemessen bei 2,16 kg bei 190 °C von weniger als 1,5 g/10 min wird angestrebt, was einer kapillaren Schmelzviskosität von > 100 Pa.s bei 285 °C und 1000 s⁻¹ entspricht. Das säuremodifizierte Polypropylen hat einen Schmelzindex, gemessen mit 2,16 kg bei 190 °C, zwischen 50 und 150 g/10 min. Insbesondere hat das modifizierte Polyethylen einen Schmelzindex, gemessen mit 2,16 kg bei 290 °C von unter 5 g/10 min. Somit ist das hier eingesetzte Polymere wiederum sehr steif. Als Schlagzähmodifikator wird EPDM eingesetzt, was wegen der enthaltenen Doppelbindung sehr empfindlich gegenüber Hitze- und/oder Lichteinwirkung ist.

EP 0 346 148 A2 will eine Polyamid enthaltende Polyethylenmischung mit verbesserter Tieftemperaturzähigkeit, gutem Fluß und guter Haftung zur Oberflächenbeschichtung schaffen. Das dort verwendete Polyethylen ist niedrig-viskos mit einem Schmelzindex von 1 bis 30 g/10 min (190 °C). Das als weitere Komponente eingesetzte Polypropylen ist steif und zeigt eine schlechte Kerbschlagzähigkeit. Wiederum wird EPDM-Kautschuk als Schlagzähmodifikator verwendet. Aus Tabelle 1 dieser Schrift geht hervor, daß hohe Steifigkeiten angestrebt werden.

EP 0 261 748 A2 beschreibt eine schlagzähmodifizierte Polymermischung mit einem neuen Schlagzähmodifikator, der ein spezielles Blockcopolymer ist sowie ein Verfahren zu dessen Herstellung. Das Blockcopolymer mit Styrolblöcken hat eine schlechte Barrierewirkung gegenüber Wasser. Das eingesetzte Poly-α-Olefin ist charakterisiert durch eine Schmelzviskosität von etwa 100 bis 5000 cp. (1 bis 50 Pa.s).

EP 0 337 153 A2 beschreibt Polyamidblends für Benzinleitungen im Automobilbereich. Diese Leitungen sollen folgende Eigenschaften aufweisen: Tieftemperaturschlagzähigkeit, Salzresistenz sowie Barriereeigenschaften gegenüber Benzin und Alkohol. Auch hier wird wieder EPDM sowie LD-PE eingesetzt, welches schlechte Barriereeigenschaften aufweist. Die Blends gemäß EP 0 337 153 haben eine sehr hohe Schmelzviskosität.

Die in EP 0 519 248 A1, DE 4 131 908 A1, EP 0 346 148 A2, EP 0 337 153 A2 und EP 0 261 748 A2 aufgeführten Materialien sind für unterschiedliche Anfordungsprofile bestimmt; meist wird ein steifes Produkt angestrebt. Die Schmelzviskositäten sind entweder sehr niedrig oder sehr hoch.

Es war daher Aufgabe der Erfindung, eine Polymermischung mit einem sehr speziellen Eigenschaftsprofil, das die optimale Balance zwischen mechanischen Eigenschaften und Barrierewirkung garantieren soll, zur Verfügung zu stellen. Dieses Eigenschaftsprofil umfaßt die folgenden Anforderungen:
* hohe Flexibilität ohne vorherigen Konditionierungsschritt
* gute Schlagzähigkeit bei Raumtemperatur
* hohe Barrierewirkung gegenüber Lösungsmitteln, insbesondere Wasser, Alkoholen und Alkanen
* den hohen Anforderungen des Blasformverfahrens genügen
* gute Verarbeitbarkeit und Maschinengängigkeit
* Verfahrenstechnisch einfaches und ökonomisches Verfahren der Verträglichkeitsvermittlung

Weiterhin soll in einer besonderen Anwendung ein aus dieser Mischung hergestelltes Blasformteil Bestandteil eines speziellen Behälters sein, in dem ein Treibmittel nicht mit dem Verbrauchsprodukt entweichen kann.

Diese Aufgabe wird durch die Polyamid enthaltende Polymermischung gemäß Anspruch 1 sowie durch das entsprechende Herstellungs verfahren des Anspruchs 21 und die Verwendung dieser Mischungen im Anspruch 22 zur Herstellung von Formteilen, gelöst.

In den Unteransprüchen sind besondere Ausführungsformen der Erfindung enthalten.

Es wurde festgestellt, daß speziell aufeinander abgestimmte Mischungskomponenten sowie eine bestimmte Schmelzviskosität der Mischung notwendig sind, um das gewünschte Eigenschaftsprofil zu erreichen. Die optimale Balance zwischen Schlagzähigkeit und Flexibilität einerseits sowie Barriereeigenschaften andererseits, verknüpft mit guter Verarbeitbarkeit und Maschinengängigkeit wird erfindungsgemäß durch eine ternäre Polymermischung mit einem schmalen Schmelzviskositätsbereich erzielt, die unbedingt zwei verschieden modifizierte Polyolefine und ein Polyamid enthalten muß. Die erfindungsgemäße ternäre Polymermischung besitzt bei 270 °C und 122,6 N eine Schmelzviskosität von 1000 bis 1400 Pa.s, bevorzugt 1000 bis 1200 Pa.s, besonders bevorzugt 1000 Pa.s, und umfaßt die folgenden Komponenten:
(A) 50 bis 75 Gew.-Teile Polyamid 6, Polyamid 66, Polyamid 12 oder Mischungen davon;
(B) 15 bis 30 Gew.-Teile mit einer ungesättigten Carbonsäure oder einem ungesättigten Carbonsäurederivat gepfropftes Polyolefin der Dichte 0,921 bis 0,96 g/cm³, wobei der Pfropfgrad zwischen 0,01 bis 1 Gew.-%, bezogen auf das gesamte gepfropfte und ungepfropfte Polyolefin, liegt;
(C) 10 bis 20 Gew.-Teile gepfropftes Polyolefinelastomeres, das wenigstens Ethylen- und Propylen-Einheiten enthält mit Ausnahme von EPDM-Kautschuken;
(D) Additive, ausgewählt aus der Gruppe, die Stabilisatoren, Gleitmittel und Füllstoffe umfaßt, wobei Gleitmittel in einer Menge von 0,5-1,5 Gew.% vorliegen,
wobei sich die Gew.-Teile der Komponenten (A) bis (D) auf 100 ergänzen, und die Mischung dadurch herstellbar ist, daß man die Komponenten (A), (B), (C) und (D) mischt und bei Extruderdrehzahlen von 150 bis 300 U/min, insbesondere von 275 bis 300 U/min im Doppelschneckenextruder extrudiert wobei in den Extruderheizzonen Temperaturen austeigend von 100 bis 280°C herrschen.

Die erfindungsgemäße ternäre Polymermischung kann als Gleitmittel mindestens eines aus der Gruppe der Stearate, die aus Zinkstearat, Aluminiumtristearat und Stearylstearat besteht, enthalten. Gegebenenfalls kann auch ein Polyethylenwachs, insbesondere ein oxidiertes Polyethylenwachs, besonders bevorzugt ein hochmolekulares oxidiertes Polyethylenwachs eingesetzt werden. Das Gleitmittel wird bevorzugt in einer Menge von 0,5 bis 1,0 Gew.-% eingesetzt. In einer bevorzugten Ausführungsform setzt man 0,5 bis 1,0 Gew.-% eines Stearats, insbesondere aus der Gruppe Zinkstearat, Aluminiumtristearat, Stearylstearat und 0 bis 0,5 Gew.-% Polyethylenwachs, insbesondere oxidiertes Polyethylenwachs, besonders bevorzugt hochmolekulares oxidiertes Polyethylenwachs, ein.

Die erfindungsgemäß angegebene Schmelzviskosität von 1000 bis 1400 Pa.s, insbesondere von 1000 bis 1200 Pa.s kann nur durch das erfindungsgemäß eingesetzte Gleitmittel, den richtigen Pfropfgrad der Komponente (B) und spezielle Extrusionsparameter erreicht werden. Bezüglich des Gleitmittels werden erfindungsgemäß in einer bevorzugten Ausführungsform die vorgenannte Kombination aus der Gruppe der Stearate und der Polyethylenwachse in den angegebenen Mengen eingesetzt. Der Pfropfgrad, d.h. das Verhältnis von Carbonsäure bzw. Carbonsäurederivat zu Polyolefin bzw. zu Polyethylen liegt zwischen 0,01 und 1,0 Gew.-%, bevorzugt zwischen 0,025 und 0,5 Gew.-%, bevorzugt zwischen 0,09 und 0,2 Gew.-%, bezogen auf das gesamte Polyolefin bzw. Polyethylen (gepfropft und ungepfropft).

Um die erfindungsgemäße Schmelzviskosität von 1000 bis 1400 Pa.s zu erreichen, muß zudem eine möglichst hohe Extruderdrehzahl von insbesondere von 275 bis 300 U/min eingestellt werden.

In einer bevorzugten Ausführungsform umfaßt die erfindungsgemäße Polymermischung 60 bis 65 Gew.-Teile von Komponente (A), 20 bis 35 Gew.-Teile von Komponente (B) und 15 bis 20 Gew.-Teile von Komponente (C).

Die Polyamidmischungskomponente, welche insbesondere Polyamid 6 oder Polyamid 6.6 ist, besitzt eine relative Viskosität von 3 bis 5,5 dl/g, bevorzugt 3 bis 4,5 dl/g, besonders bevorzugt 3,5 bis 3,8 dl/g, wobei diese Viskositätswerte an einer 1%-igen Polymerlösung in 98%-iger Schwefelsäure bei 23 °C gemessen wurden.

Das als Komponente (B) verwendete Polyolefin muß so ausgewählt werden, daß seine Schmelzviskosität mit der des als Komponente (A) eingesetzten Polyamids harmoniert. Das hier als Polyolefin bevorzugt verwendete Polyethylen besitzt einen Schmelzindex (MFI) nach DIN 53735 oder ISO 1133 von 1 bis 20 g/10 min, bevorzugt 5 bis 15 g/10 min, besonders bevorzugt 5 bis 10 g/10 min (bei 190 °C und 21,6 kg).

Bestimmend für die Barrierewirkung ist die Dichte des Polyethylens, welche 0,92 bis 0,96 g/cm³ betragen sollte. Für besondere Anwendungen ist ein Dichtebereich von 0,94 bis 0,95 g/cm³ vorteilhaft.

Zur Erhöhung der Verträglichkeit zwischen der Komponente (A) und (B) wird ein Teil der Komponente (B) mit einer ungesättigten Carbonsäure oder einem ungesättigten Carbonsäurederivat gepfropft. Bevorzugterweise wird mindestens 40 Gew.-% des Polyolefins funktionalisiert bzw. gepfropft. Für eine besondere Anwendung ist es vorteilhaft, bis zu 100% der Komponente (B) zu pfropfen.

Die erfindungsgemäße Verträglichkeitsvermittlung über Pfropfung ist verfahrenstechnisch einfacher und ökonomischer als die Verwendung von Copolyolefinen, in denen α, β-ungesättigte Carbonsäuren einpolymerisiert wurden. Insbesondere die mit Säureanhydridgruppen gepfropften Polyolefine zeigen gegenüber denen mit Carboxylgruppen gepfropften eine erhöhte Wirksamkeit in der Verträglichkeitsvermittlung. Neben dem besonders vorteilhaften Maleinsäureanhydrid, welches bezogen auf den Polyolefinanteil in Mengen von 0,01 bis 1 Gew.-%, bevorzugt 0,05 bis 0,5 Gew.-%, besonders bevorzugt 0,1 bis 0,2 Gew.-%, eingesetzt wird, sind erfindungsgemäß auch andere ungesättigte Carbonsäuren oder Carbonsäurederivate als Pfropfungsmittel geeignet, wie z.B. Maleinsäure, Itaconsäure, Acrylsäure, Methacrylsäure, Fumarsäure, Citraconsäure, Mesaconsäure, Maleinsäureanhydrid, Itaconsäureanhydrid, Citraconsäureanhydrid, Dimethylmaleat, Dipropylmaleat, Diisobutylmaleat, Dicyclopentylmaleat, Dihexylmaleat, Dibenzylmaleat, Phenylethylmaleat.

Die Pfropfreaktion erfolgt gemäß an sich bekannten Verfahren. Hierbei wird das Polyolefin, die ungesättigte Carbonsäure oder deren Derivat und ein Radikalbildner, wie z. B. ein Peroxid gemischt und die Mischung extrudiert, wobei die Pfropfungsreaktion abläuft. Die Menge der verwendeten ungesättigten Carbonsäure oder des ungesättigten Carbonsäurederivats liegt bezogen auf den Polyolefinanteil im Bereich von 0,01 bis 1,0 Gew.-%, bevorzugt 0,05 bis 0,5 Gew.-%, besonders bevorzugt 0,09 bis 0,2 Gew.-%.

Um die einwandfreie Weiterverarbeitung eines erfindungsgemäßen Formteils ohne vorherige Konditionierung zu gewährleisten, ist Komponente (C) notwendig, welche ein funktionalisiertes Polyolefinelastomer ist, das u.a. Ethylen- und Propyleneinheiten enthält. Für besondere Anwendungen hat sich ein gepfropftes Polyolefinelastomer aus Ethylen-, Propylen- und Buten-1-Einheiten bestens bewährt.

Die Erfindung betrifft weiterhin das Verfahren zur Herstellung der erfindungsgemäßen Polyamid enthaltenden Polymermischungen durch die nachfolgenden Schritte :
- Mischen der Komponenten (A), (B), und (D) und
- Extrudieren in einem Doppelschneckenextruder bei Extruderdrehzahlen von 150 bis 300 U/min, insbesondere von 275 bis 300 U/min wobei in den Extruderheizzonen Temperaturen austeigend von 100 bis 280°C herrschen.

Ein Verfahren zur Herstellung erfindungsgemäßer ternärer Polymermischungen umfaßt in einem Extruderdurchgang die folgenden Teilschritte:
- Pfropfen des Polyolefins im ersten Teil eines Extruders
- Schmelzemischen des gepfropften Polyolefins (ohne vorherige Isolierung) im zweiten Teil dieses Extruders mit dem Polyamid und dem Polyolefinelastomeren, welche über einen Seitenextruder zugeführt werden,
wobei an geeigneter Stelle die Additive zugegeben werden.

Ein anderes Verfahren zur Herstellung erfindungsgemäßer Polymermischungen ist ein Mehrschrittverfahren. Im ersten Schritt wird das Polyolefin im Schmelzeextrusionsverfahren gepfropft, anschließend granuliert und getrocknet. Im zweiten Schritt wird dieses Granulat mit dem Granulat des Polyamids und des Polyolefinelastomeren vermischt, wobei hier die gewünschten Additive zugegeben werden können. In einem letzten Schritt erfolgt die Compoundierung durch Extrusion mit anschließender Granulierung und Trocknung.

Die erfindung betrifft weiter die Verwendung der erfindungsgemäßen ternären Polymermischung zur Herstellung von Formteilen mit oben beschriebenem Eigenschaftsprofil. Geeignete Verfahren hierfür sind das Spritzguß-, Extrusions-, Koextrusions-, Blasform- und Umformverfahren. Für eine ganz spezielle Anwendung ist das Blasformverfahren besonders bevorzugt.

Eine besondere Anwendung finden aus der erfindungsgemäßen Polymermischung hergestellte Blasformteilbeutel als Innenschicht in Behältern, die eine Außenschicht und eine Innenschicht mit dazwischenliegendem Treibmittel sowie ein Ventil umfassen. Eine besondere Ausführungsform sind z.B. Spraydosen, die kein Treibmittel an die Umwelt abgeben. Solche Spraydosen enthalten in einer Metalldose erfindungsgemäßen flexiblen Polymerbeutel und das Treibmittel befindet sich im Zwischenraum zwischen diesem Formteilbeutel und Metallwand. Beim Oeffnen des Ventils wird aufgrund des vom Treibmittel ausgeübten Druckes das Verbrauchsgut freigegeben.

Ein besonderer Vorteil der Erfindung ist, daß der Formteilbeutel aus der erfindungsgemäßen Polymermischung ohne vorherige Konditionierung derart flexibel und schlagzäh ist, daß er beim Einstoßen in die Metalldose nicht zerstört wird. Aufgrund seiner Barrierewirkung gegenüber Lösungsmitteln, insbesondere Wasser, Alkoholen und Alkanen sind darüberhinaus verschiedene Treibmittel einsetzbar.

Erfindungsgemäß ist das Treibmittel ausgewählt aus der Gruppe der Alkane mit 3 bis 5 C-Atomen, wobei Propan, Butan oder Pentan und deren Isomere oder Mischungen davon bevorzugt sind.

Die erfindungsgemäßen Polyamid enthaltenden Polymermischungen können somit auch in einem Behälter verwendet werden, der eine Außen- und eine Innenschicht mit dazwischenliegendem Treibmittel sowie ein Ventil umfaßt, in dem diese Innenschicht ein Formteilbeutel ist, welcher durch Blasformen der erfindungsgemäßen ternären Polymermischung erhältlich ist.

Die folgenden Beispiele erläutern die Erfindung, ohne sie zu beschränken.

### I KOMPONENTE (A)

In den Vergleichsbeispielen 1 bis 3 sowie im erfindungsgemäßen Beispiel wurde als Polyamid ein Polyamid 6 mit einer relativen Viskosität von 3,0 bis 5,5 dl/g (1%-ige PA-Lösung in 98%-iger Schwefelsäure bei 23 °C) eingesetzt.

### II HERSTELLUNG DER KOMPONENTE (B)

In den Vergleichsbeispielen 2 und 3 sowie im erfindungsgemäßen Beispiel wurden die gepfropften Polyolefine wie folgt hergestellt:

Maleinsäureanhydrid und Dicumylperoxid wurden in Gewichtsmengen von 1:0,1 unter Zugabe von Kaolin als Hilfsmittel miteinander verrieben und dann mit dem Polyolefin vermischt.

Mengen und Sorte des jeweils eingesetzten Polyolefins sind Tabelle (1) zu entnehmen.

Nach der Vermischung erfolgte die Pfropfungsreaktion im Extruder unter den folgenden Bedingungen:
- Temperaturen der Extruderheizzonen [°C]: 100, 220, 250, 250, 260, 260
- Drehzahl der Extruder [U/min]:150

### III HERSTELLUNG DER POLYMERMISCHUNGEN

In den Vergleichsbeispielen 2 und 3 sowie in erfindungsgemäßem Beispiel wurden die Mischungskomponenten gemäß den in Tabelle (2) beschriebenen Mengen eingesetzt. In Komponente (A) des erfindungsgemäßen Beispiels können Gleitmittel bis zu maximal 1,5 Gew.-%, bevorzugt bis zu 1,0 Gew.-%, sowie Stabilisatoren (0,2 Gew.-%) enthalten sein.

Die Komponenten (A), (B) und (D) bzw. (A), (B) (C) und (D) wurden vermischt und anschließend unter den nachfolgend genannten Bedingungen extrudiert:
- Temperaturen der Extruderheizzonen [°C]: 100, 260, 270, 270, 280, 280
- Drehzahl des Extruders [U/min]:150 bis 300, insbesondere 275 bis 300 U/min.

Erfindungsgemäß finden Doppelschneckenextruder (Werner & Pfleiderer Typ ZSK 70) Verwendung.

Als Komponente (C) wurde ein funktionalisiertes Polyolefinelastomer mit Ethylen-, Propylen- und Buten-1-Einheiten eingesetzt (Handelsname N-Tafmer (N-Tafmer MC 201)/ Mitsui Petrochem. Ind.).

### IV BARRIEREEIGENSCHAFTEN

Die Permeationsmessungen erfolgten an im Blasformverfahren hergestellten Polymerbeuteln mit einem Volumen von 210 ml. Sie wurden mit ca. 30 g des zu vermessenden Lösungsmittels gefüllt, dicht verschlossen und anschließend der Gewichtsverlust bei Raumtemperatur und bei 35 °C über einen Zeitraum von vier Wochen verfolgt. Die Ergebnisse wurden auf ein Jahr extrapoliert und sind für die Vergleichsbeispiele 1 bis 3 sowie für das erfindungsgemäße Beispiel der Tabelle (3) zu entnehmen.

### V MECHANISCHE EIGENSCHAFTEN BEI DER MONTAGE

Zur Herstellung von z.B. Spraydosen werden im Blasformverfahren hergestellte Polymerbeutel in die Oeffnung einer Metalldose gestoßen. Da die Oeffnung der Metalldose nur 60% des Durchmessers des Polymerbeutels beträgt, ist die mechanische Belastung des Beutels beim Einstoßen sehr groß. Beurteilungskriterien sind daher die Dichtigkeit des Beutels nach dem Einstoßen sowie das Vorhandensein von dauerhaften Falten. Die Ergebnisse dieser Tests sind für die Montage der Polymerbeutel gemäß den Mischungszusammensetzungen der Vergleichsbeispiele 1 bis 3 und erfindungsgemäßem Beispiel in Tabelle 4 zusammengefaßt, wobei die folgende Bewertung angewandt wurde:
- gut: dicht und faltenfrei
- ungenügend: undicht und/oder Falten

Ein weiteres wichtiges Kriterium des Montageverhaltens ist die Möglichkeit, den Polymerbeutel ohne vorherige Konditionierung mit gutem Ergebnis einstoßen zu können. Die Ergebnisse hierzu sind ebenfalls der Tabelle (4) zu entnehmen.

Im Vergleich zum reinen Polyamid 6 (Vergleichsbeispiel 1) werden durch den Zusatz des Polyolefins B-1 (Vergleichsbeispiel 2) die Barriereeigenschaften zwar verbessert, erreichen aber noch kein akzeptables Niveau. Des weiteren ist die Montierbarkeit völlig ungenügend.

Durch Zusatz von Komponente (C) (Polyolefinelastomer) (Vergleichsbeispiel 3) wird nur mit vorheriger Konditionierung eine gute Montierbarkeit erreicht. Die Barrierewerte sind allerdings noch nicht ausreichend.

Die erfindungsgemäße ternäre Mischung von Beispiel 1 ist dagegen gut verarbeitbar und maschinengängig und erfüllt sowohl die Ansprüche an die Barriereeigenschaften als auch an die Montierbarkeit. Außerdem ermöglichst es als einziges den Einbau ohne vorherige Konditionierung.

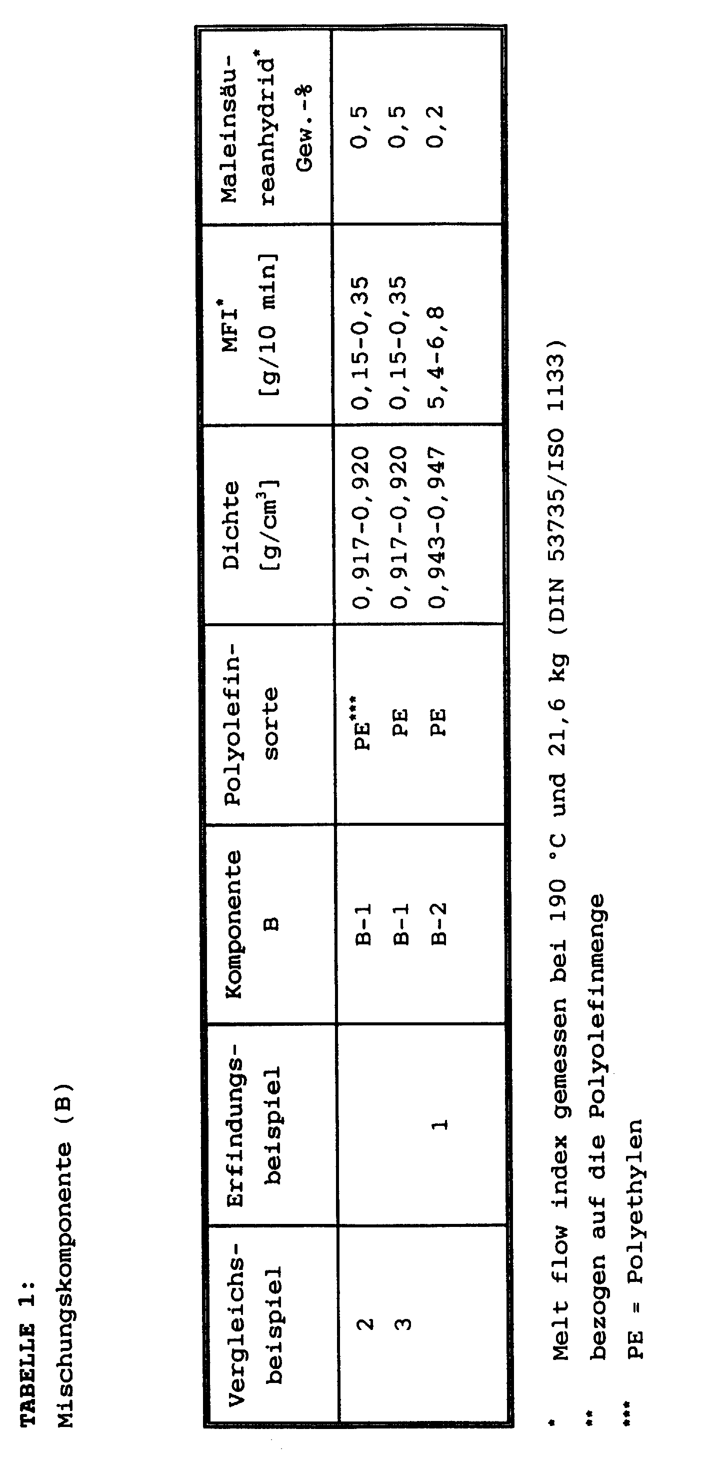

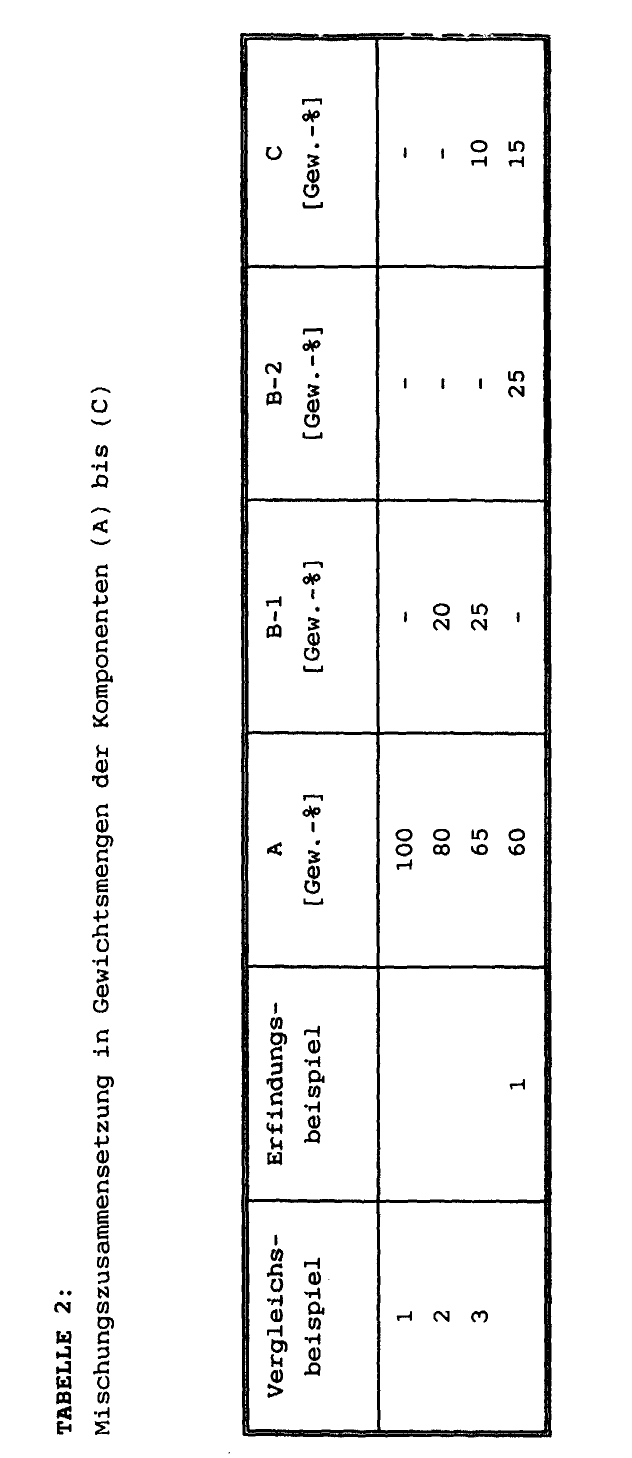

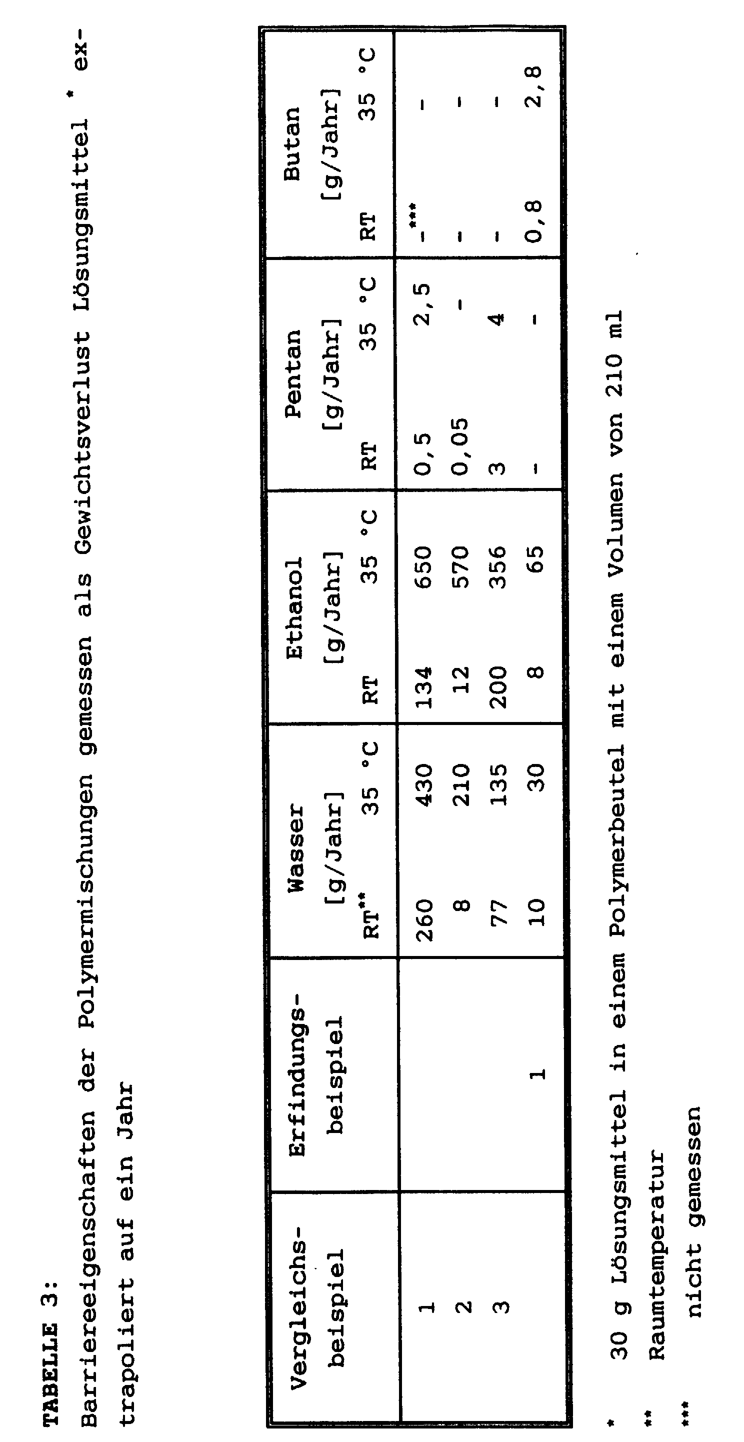

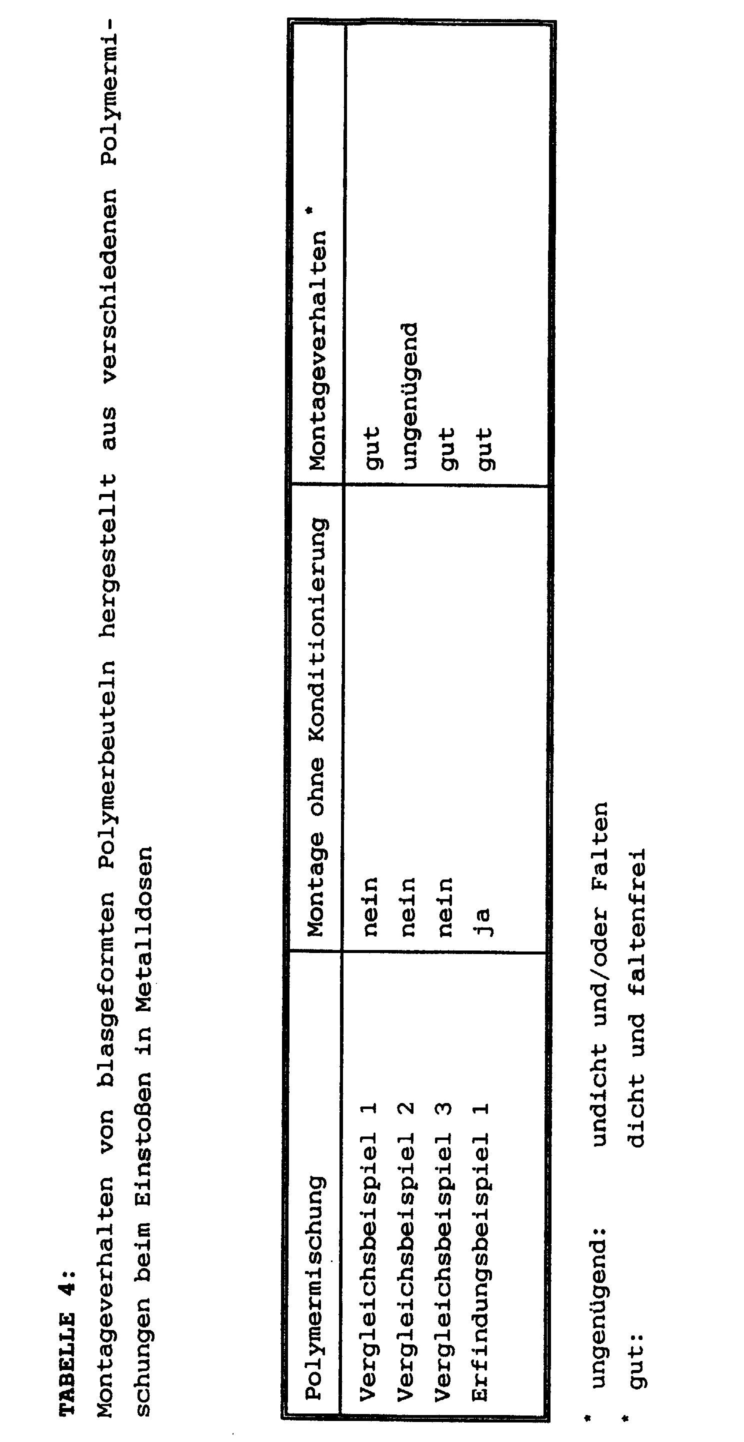

## Patentansprüche

1. Polyamid enthaltende Polymermischung, dadurch gekennzeichnet, daß sie eine Schmelzviskosität von 1000 bis 1400 Pa.s bei 270°C und einer Belastung von 122,6 N besitzt und folgende Komponenten umfaßt:
(A) 50 bis 75 Gew.-Teile Polyamid 6, Polyamid 66, Polyamid 12 oder Mischungen dieser Polyamide;
(B) 15 bis 30 Gew.-Teile mit einer ungesättigten Carbonsäure oder einem ungesättigten Carbonsäurederivat gepfropftes Polyolefin der Dichte 0,92 bis 0,96 g/cm³, wobei der Pfropfgrad zwischen 0,01 bis 1 Gew.-%, bezogen auf das gesamte gepfropfte und ungepfropfte Polyolefin, liegt.
(C) 10 bis 20 Gew.-Teile gepfropftes Polyolefinelastomeres das Ethylen- und Propylen-Einheiten enthält, mit Ausnahme von EPDM-Kautschuken;
(D) Additive, ausgewählt aus der Gruppe, die Stabilisatoren, Gleitmittel und Füllstoffe umfaßt,
wobei Gleitmittel in einer Menge von 0,5 bis 1,5 Gew.-% vorliegen, sich die Gew.-Teile der Komponenten (A) bis (D) auf 100 ergänzen, und die Polymermischung dadurch herstellbar ist, daß man die Komponenten (A), (B), (C) und (D) mischt und bei Extruderdrehzahlen von 150 bis 300 U/min in einem Doppelschneckenextruder extrudiert, wobei in den Extruderheizzonen Temperaturen ansteigend von 100 bis 280°C herrschen.

2. Polymermischung gemäß Anspruch 1, dadurch gekennzeichnet, daß man die Komponenten (A), (B) und (D) bzw. (A), (B), (C) und (D) mischt und bei Extruderdrehzahlen von 275 bis 300 U/min in einem Doppelschneckenextruder extrudiert.

3. Polymermischung gemäß Anspruch 1 oder 2, dadurch gekennzeichnet, daß sie eine Schmelzviskosität von 1000 bis 1200 Pa.s besitzt.

4. Polymermischung gemäß einem der Ansprüche 1 bis 3, dadurch gekennzeichnet, daß sie eine Schmelzviskosität von 1000 Pa.s besitzt.

5. Polymermischung gemäß einem der Ansprüche 1 bis 4, dadurch gekennzeichnet, daß sie als Gleitmittel mindestens eines aus der Gruppe der Stearate und der Polyethylenwachse enthält.

6. Polymermischung gemäß einem der Ansprüche 1 bis 5, dadurch gekennzeichnet, daß sie das Gleitmittel in einer Menge von 0,5 bis 1,0 Gew.-% enthält.

7. Polymermischung gemäß einem der Ansprüche 1 bis 6, dadurch gekennzeichnet, daß sie 0,5 bis 1,0 Gew.-% mindestens eines Stearats aus der Gruppe Zinkstearat, Aluminiumtristearat, Stearoylstearat und 0 bis 0,5 Gew.-% eines Polyethylenwachses enthält.

8. Polymermischung gemäß Anspruch 7, dadurch gekennzeichnet, daß sie 0 bis 0,5 Gew.-% eines oxidierten Polyethylenwachses enthält.

9. Polymermischung gemäß Anspruch 8, dadurch gekennzeichnet, daß sie 0 bis 0,5 Gew.-% eines hochmolekularen oxidierten Polyethylenwachses enthält.

10. Polymermischung gemäß einem der vorhergehenden Ansprüche, dadurch gekennzeichnet, daß der Pfropfgrad der Komponenten (B) zwischen 0,025 und 0,5 Gew.-%, bezogen auf den Polyolefinanteil, liegt.

11. Polymermischung gemäß einem der vorhergehenden Ansprüche, dadurch gekennzeichnet, daß der Pfropfgrad der Komponenten (B) zwischen 0,09 bis 0,2 Gew.-%, bezogen auf den Polyolefinanteil, liegt.

12. Polymermischung gemäß einem der vorhergehenden Ansprüche, dadurch gekennzeichnet, daß sie 60 bis 65 Gew.-Teile der Komponente (A), 20 bis 30 Gew.-Teile der Komponente (B) und 15 bis 20 Gew.-Teile der Komponente (C) umfaßt.

13. Polymermischung gemäß einem der vorhergehenden Ansprüche, dadurch gekennzeichnet, daß das ungepfropfte Polyolefin eine Dichte von 0,94 bis 0,95 g/cm³ besitzt.

14. Polymermischung gemäß einem der vorhergehenden Ansprüche, dadurch gekennzeichnet, daß das Polyolefin Polyethylen ist.

15. Polymermischung gemäß Anspruch 14, dadurch gekennzeichnet, daß 40 bis 100 Gew.-% des Polyethylens mit einer ungesättigten Carbonsäure oder einem Carbonsäurederivat gepfropft sind.

16. Polymermischung gemäß Anspruch 15, dadurch gekennzeichnet, daß das Polyethylen (ungepfropft) einen Schmelzindex von 1 bis 20 g/10 min (bei 190°C und einer Belastung von 21,6 kg) besitzt.

17. Polymermischung gemäß Anspruch 16, dadurch gekennzeichnet, daß das Polyethylen (ungepfropft) einen Schmelzindex von 5 bis 15 g/10 min (bei 190°C und einer Belastung von 21,6 kg) besitzt.

18. Polymermischung gemäß Anspruch 17, dadurch gekennzeichnet, daß das Polyethylen (ungepfropft) einen Schmelzindex von 5 bis 10 g/10 min (bei 190°C und einer Belastung von 21,6 kg) besitzt.

19. Polymermischung gemäß einem der vorhergehenden Ansprüche, dadurch gekennzeichnet, daß das ungesättigte Carbonsäurederivat Maleinsäureanhydrid ist.

20. Polymermischung gemäß einem der vorhergehenden Ansprüche, dadurch gekennzeichnet, daß das gepfropfte Polyolefinelastomere Ethylen-, Propylen- und Buten-1-Einheiten enthält.

21. Verfahren zur Herstellung der Polyamid enthaltenden Polymermischungen gemäß einem der Ansprüche 1 bis 20 durch die nachfolgenden Schritte:
- Mischen der Komponenten (A), (B), (C) und (D) und
- Extrudieren bei Extruderdrehzahlen von 150 bis 300 U/min, insbesondere von 275 bis 300 U/min, wobei in den Extruderheizzonen Temperaturen austeigend von 100 bis 280°C herrschen.

22. Verwendung der Polyamid enthaltenden Polymermischung gemäß einem der Ansprüche 1 bis 20 zur Herstellung von Formteilen durch Spritzgießen, Extrudieren, Koextrudieren, Blasformen oder Umformen, wobei das Formteil ein blasgeformter Beutel ist, der die Innenseite eines Behälters bildet, welcher eine Außenseite und eine Innenschicht mit dazwischenliegendem Treibmittel sowie ein Ventil umfaßt.

23. Verwendung der Polyamid enthaltenden Polymermischung nach Anspruch 22 zur Herstellung von Formteilen deren Außenschicht aus Metall ist, wobei das Treibmittel ausgewählt ist aus der Gruppe der Alkane mit 3 bis 5 C-Atomen.

24. Verwendung der Polyamid enthaltenden Polymermischung nach Anspruch 22 zur Herstellung von Formteilen, wobei das Treibmittel ausgewählt ist aus der Gruppe Propan, Butan oder Pentan und deren Isomere oder Gemische davon.

## Claims

1. Polyamide-containing polymer blend, characterized in that it has a melt viscosity of from 1000 to 1400 Pa.s at 270°C and with a load of 122.6 N and comprises the following components:
(A) from 50 to 75 parts by weight of PA 6, PA 66, PA 12 or mixtures of these polyamides;
(B) from 15 to 30 parts by weight of polyolefin, density from 0.92 to 0.96 g/cm³, grafted with an unsaturated carboxylic acid or with an unsaturated carboxylic acid derivative, where the degree of grafting is from 0.01 to 1% by weight, based on the entire grafted and ungrafted polyolefin;
(C) from 10 to 20 parts by weight of grafted polyolefin elastomer which contains ethylene units and propylene units, with the exception of EPDM rubbers;
(D) additives selected from the class which includes stabilizers, lubricants and fillers,
where the amount of lubricants present is from 0.5 to 1.5% by weight, the parts by weight of components (A) to (D) total to 100, and the polymer blend can be prepared by mixing components (A), (B), (C) and (D) and extruding at extruder rotation rates of from 150 to 300 rpm in a twin-screw extruder, where the temperatures prevailing in the extruder heating zones rise from 100 to 280°C.

2. Polymer blend according to Claim 1, characterized in that components (A), (B) and (D) or (A), (B), (C) and (D) are mixed and extruded at extruder rotation rates of from 275 to 300 rpm in a twin-screw extruder.

3. Polymer blend according to Claim 1 or 2, characterized in that it has a melt viscosity of from 1000 to 1200 Pa.s.

4. Polymer blend according to one of Claims 1 to 3, characterized in that it has a melt viscosity of 1000 Pa.s.

5. Polymer blend according to one of Claims 1 to 4, characterized in that it comprises at least one lubricant selected from the class consisting of the stearates and the polyethylene waxes.

6. Polymer blend according to one of Claims 1 to 5, characterized in that the amount of lubricant present is from 0.5 to 1.0% by weight.

7. Polymer blend according to one of Claims 1 to 6, characterized in that it comprises from 0.5 to 1.0% by weight of at least one stearate selected from the class consisting of zinc stearate, aluminium tristearate and stearoyl stearate and from 0 to 0.5% by weight of a polyethylene wax.

8. Polymer blend according to Claim 7, characterized in that it comprises from 0 to 0.5% by weight of an oxidized polyethylene wax.

9. Polymer blend according to Claim 8, characterized in that it comprises from 0 to 0.5% by weight of a high-molecular-weight oxidized polyethylene wax.

10. Polymer blend according to one of the preceding claims, characterized in that the degree of grafting of components (B) is from 0.025 to 0.5% by weight, based on the amount of polyolefin.

11. Polymer blend according to one of the preceding claims, characterized in that the degree of grafting of components (B) is from 0.09 to 0.2% by weight, based on the amount of polyolefin.

12. Polymer blend according to one of the preceding claims, characterized in that it includes from 60 to 65 parts by weight of component (A), from 20 to 30 parts by weight of component (B) and from 15 to 20 parts by weight of component (C).

13. Polymer blend according to one of the preceding claims, characterized in that the ungrafted polyolefin has a density of from 0.94 to 0.95 g/cm³.

14. Polymer blend according to one of the preceding claims, characterized in that the polyolefin is polyethylene.

15. Polymer blend according to Claim 14, characterized in that from 40 to 100% by weight of the polyethylene has been grafted with an unsaturated carboxylic acid or with a carboxylic acid derivative.

16. Polymer blend according to Claim 15, characterized in that the polyethylene (ungrafted) has a melt index of from 1 to 20 g/10 min (at 190°C and with a load of 21.6 kg).

17. Polymer blend according to Claim 16, characterized in that the polyethylene (ungrafted) has a melt index of from 5 to 15 g/10 min (at 190°C and with a load of 21.6 kg).

18. Polymer blend according to Claim 17, characterized in that the polyethylene (ungrafted) has a melt index of from 5 to 10 g/10 min (at 190°C and with a load of 21.6 kg).

19. Polymer blend according to one of the preceding claims, characterized in that the unsaturated carboxylic acid derivative is maleic anhydride.

20. Polymer blend according to one of the preceding claims, characterized in that the grafted polyolefin elastomer comprises ethylene units, propylene units and 1-butene units.

21. Process for preparing the polyamide-containing polymer blends according to one of Claims 1 to 20 by means of the following steps:
- mixing components (A), (B), (C) and (D), and
- extruding at extruder rotation rates of from 150 to 300 rpm, in particular from 275 to 300 rpm, where the temperatures prevailing in the extruder heating zones rise from 100 to 280°C.

22. Use of the polyamide-containing polymer blend according to one of Claims 1 to 20 for producing mouldings by injection moulding, extrusion, coextrusion, blow moulding or forming, where the moulding is a blow-moulded pouch which forms the inner side of a container which includes an outer side and an inner layer with a propellant between these, and also a valve.

23. Use of the polyamide-containing polymer blend according to Claim 22 for producing mouldings with an outer layer which has been made from metal, where the propellant has been selected from the class consisting of the alkanes having from 3 to 5 carbon atoms.

24. Use of the polyamide-containing polymer blend according to Claim 22 for producing mouldings, where the propellant has been selected from the class consisting of propane, butane and pentane and their isomers, or mixtures of these.

## Revendications

1. Mélange de polymères contenant du polyamide, caractérisé en ce qu'il présente une viscosité à l'état fondu de 1000 à 1400 Pa.s à 270°C et sous une charge de 122,6 N, et qu'il renferme les composants suivants :
(A) de 50 à 75 parties en poids de polyamide 6, polyamide 66, polyamide 12 ou mélanges de ces polyamides ;
(B) de 15 à 30 parties en poids d'une polyoléfine d'une densité de 0,92 à 0,96 g/cm³, greffée d'un acide carboxylique insaturé ou d'un dérivé d'acide carboxylique insaturé, le deuxième greffage étant compris entre 0,01 et 1% en poids, exprimé par rapport au total de la polyoléfine greffée et non greffée ;
(C) de 10 à 20 parties en poids d'un élastomère de polyoléfine greffé contenant des motifs éthylène et propylène, à l'exception des caoutchoucs EPDM ;
(D) des additifs choisis dans le groupe comprenant les stabilisants, lubrifiants et charges, dans lequel les lubrifiants sont présents à raison de 0,5 à 1,5 % en poids, les parties en poids des composants A à D s'ajoutent à 100, et le mélange de polymères est susceptible d'être préparé par le mélange des composants A, B, C et D et par l'extrusion à une vitesse d'extrusion de 150 à 300 t/min., dans une extrudeuse à double vis, des températures croissantes de 100 à 280°C règnant dans les zones de chauffage de l'extrudeuse.

2. Mélange de polymères selon la revendication 1, caractérisé en ce qu'on mélange les composants A, B, et D ou bien les composants A, B, C et D, et qu'on les extrude à une vitesse d'extrusion de 275 à 300 t/min., dans une extrudeuse à double vis.

3. Mélange de polymères selon les revendications 1 ou 2, caractérisé en ce qu'il présente une viscosité à l'état fondu de 1000 à 1200 Pa.s.

4. Mélange de polymères selon une quelconque des revendications 1 à 3, caractérisé en ce qu'il présente une viscosité à l'état fondu de 1000 Pa.s.

5. Mélange de polymères selon une quelconque des revendications 1 à 4, caractérisé en ce qu'il comprend comme lubrifiant au moins un élément choisi dans le groupe des stéarates et des cires de polyéthylène.

6. Mélange de polymères selon une quelconque des revendications 1 à 5. caractérisé en ce qu'il comprend l'agent de démoulage à raison de 0,5 à 1,0 % en poids.

7. Mélange de polymères selon une quelconque des revendications 1 à 6. caractérisé en ce qu'il comprend au moins 0,5 à 1,0 % en poids d'au moins un stéarate du groupe stéarate de zinc, tristéarate d'aluminium, stéarate de stéaroyle et de 0 à 0,5 % en poids d'un cire de polyéthylène.

8. Mélange de polymères selon la revendication 7, caractérisé en ce qu'il renferme de 0 à 0,5 % en poids d'une cire de polyéthylène oxydée.

9. Mélange de polymères selon la revendication 8, caractérisé en ce qu'il renferme de 0 à 0,5 % en poids d'une cire de polyoxyéthylène à poids moléculaire élevé.

10. Mélange de polymères selon une quelconque des revendications précédentes, caractérisé en ce que le degré de greffage des composants B est compris entre 0,025 et 0,5 % en poids, exprimé par rapport à la teneur de polyoléfine.

11. Mélange de polymères selon une quelconque des revendications précédentes, caractérisé en ce que le degré de greffage des composants B est compris entre 0,09 et 0,2 % en poids, exprimé par rapport à la teneur de polyoléfine.

12. Mélange de polymères selon une quelconque des revendications précédentes, caractérisé en ce qu'il comprend de 60 à 65 parties en poids de composant A. de 20 à 30 parties en poids de composant B, et de 15 à 20 parties en poids de composant C.

13. Mélange de polymères selon une quelconque des revendications précédentes, caractérisé en ce que la polyoléfine non greffée présente une densité de 0.94 à 0,95 g/cm³.

14. Mélange de polymères selon une quelconque des revendications précédentes, caractérisé en ce que la polyoléfine est le polyéthylène.

15. Mélange de polymères selon la revendication 14, caractérisé en ce que 40 à 100 % en poids du polyéthylène sont greffés à l'aide d'un acide carboxylique insaturé ou d'un dérivé d'acide carboxylique insaturé.

16. Mélange de polymères selon la revendication 15, caractérisé en ce que le polyéthylène (non greffé) présente un indice de fluidité de 1 à 20 g/10 min. (à 190°C, sous une charge de 21,6 kg).

17. Mélange de polymères selon la revendication 16, caractérisé en ce que le polyéthylène (non greffé) présente un indice de fluidité de 5 à 15 g/10 min. (à 190°C, sous une charge de 21,6 kg).

18. Mélange de polymères selon la revendication 17, caractérisé en ce que le polyéthylène (non greffé) présente un indice de fluidité de 5 à 10 g/10 min. (à 190°C, sous une charge de 21,6 kg).

19. Mélange de polymères selon une quelconque des revendications précédentes, caractérisé en ce que le dérivé d'acide carboxylique insaturé est l'anhydride de l'acide maléique.

20. Mélange de polymères selon une quelconque des revendications précédentes, caractérisé en ce que l'élastomère de polyoléfine greffé contient des motifs éthylène, propylène et 1-butène.

21. Procédé de préparation des mélanges de polymères renfermant du polyamide selon une quelconque des revendications 1 à 20, comportant les étapes suivantes :
- mélange des composants A, B, C et D et
- extrusion à une vitesse de rotation de l'extrudeuse de 150 à 300 t/min., en particulier de 275 à 300 t/min., des températures croissantes de 100 à 280°C régnant dans les zones de chauffage de l'extrudeuse.

22. Utilisation d'un mélange de polymères comprenant du polyamide selon une quelconque des revendications 1 à 20, pour la fabrication de pièces moulées par moulage par injection, extrusion, coextrusion, extrusion soufflage ou formage, dans lequel la pièce moulée est une poche soufflée, dont la face intérieure constitue un conteneur, qui comprend entre sa face extérieure et sa face intérieure un carburant ainsi qu'une valve.

23. Utilisation du mélange de polymères contenant du polyamide selon la revendication 22, pour la fabrication de pièces moulées dont la couche extérieure est en métal, le carburant étant choisi dans le groupe formé par les alcanes comportant de 3 à 5 atomes de carbone.

24. Utilisation du mélange de polymères contenant du polyamide selon la revendication 22, pour la fabrication de pièces moulées, le carburant étant choisi dans le groupe propane, butane ou pentane, ainsi que leurs isomères ou leurs mélanges.
